(19) Europäisches Patentamt
European Patent Office
Office européen des brevets

(11) Veröffentlichungsnummer: **0 072 019 A1**

(12) **EUROPÄISCHE PATENTANMELDUNG**

(21) Anmeldenummer: **82107204.8**

(22) Anmeldetag: **10.08.82**

(51) Int. Cl.³: **D 06 P 5/00**, B 41 M 5/02 // D06P1/18

(30) Priorität: **12.08.81 DE 3131849**

(43) Veröffentlichungstag der Anmeldung: **16.02.83 Patentblatt 83/7**

(84) Benannte Vertragsstaaten: **CH DE FR GB IT LI**

(71) Anmelder: **HOECHST AKTIENGESELLSCHAFT, Postfach 80 03 20, D-6230 Frankfurt/Main 80 (DE)**

(72) Erfinder: **Sommer, Karl, Dr., Thewaltstrasse 6, D-6240 Königstein/Taunus (DE)**
Erfinder: **Schickfluss, Rudolf, Dr., Luisenstrasse 37, D-6233 Kelkheim (Taunus) (DE)**
Erfinder: **Schneider, Manfred, Cuntzstrasse 1, D-6239 Eppstein/Taunus (DE)**
Erfinder: **Schuster, Claus, Ulmenstrasse 30, D-6238 Hofheim am Taunus (DE)**

(54) **Transferdruckträger, Verfahren zu seiner Herstellung und seine Anwendung.**

(57) Die Erfindung betrifft Transferdruckträger, die dadurch gekennzeichnet sind, dass sie mit einer Zubereitung imprägniert oder bedruckt sind, die einen Farbstoff der allgemeinen Formel (I)

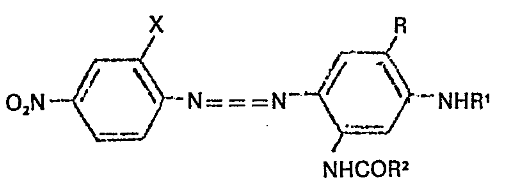

(I)

in der X Wasserstoff, Methyl, Chlor, Brom oder Nitro, R Wasserstoff, Methyl oder Chlor ist, $R^1$ Isopropyl, Isobutyl oder Pentyl-(3) und $R^2$ Methyl, Ethyl, n-Propyl oder n-Butyl bedeuten, oder Mischungen solcher Farbstoffe enthalten, ferner ein Verfahren zur Herstellung dieser Transferdruckträger durch Imprägnieren oder Bedrucken der Trägermaterialien mit Zubereitungen, die einen Farbstoff der Formel (I) oder Gemische solcher Farbstoffe enthalten, sowie die Verwendung der Träger zum Färben oder Bedrucken von flächenförmigen Gebilden aus synthetischen oder teilsynthetischen polymeren Materialien oder aus natürlichen Fasermaterialien.

EP 0 072 019 A1

# Transferdruckträger, Verfahren zu seiner Herstellung und seine Anwendung

Die Erfindung betrifft Transferdruckträger, die dadurch gekennzeichnet sind, daß sie mit einer Zubereitung imprägniert oder bedruckt sind, die einen Farbstoff der allgemeinen Formel (I)

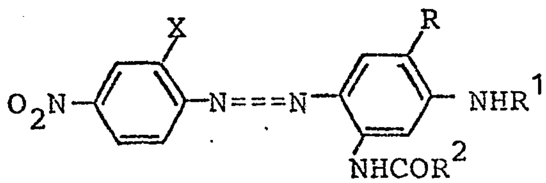

(I)

in der X Wasserstoff, Methyl, Chlor, Brom oder Nitro, R Wasserstoff, Methyl oder Chlor ist, $R^1$ Isopropyl, Isobutyl oder Pentyl-(3) und $R^2$ Methyl, Ethyl, n-Propyl oder n-Butyl bedeuten, oder Mischungen solcher Farbstoffe enthalten.

Bevorzugte erfindungsgemäße Transferdruckträger sind mit Zubereitungen imprägniert oder bedruckt, die Farbstoffe der allgemeinen Formel (I) enthalten, in der X Wasserstoff oder Chlor, R Wasserstoff, $R^1$ Isopropyl oder Isobutyl und $R^2$ Methyl oder Ethyl bedeuten, oder Mischungen solcher Farbstoffe enthalten.

Die Erfindung betrifft weiterhin ein Verfahren zur Herstellung der erfindungsgemäßen Träger, das dadurch gekennzeichnet ist, daß das Trägermaterial mit Zubereitungen imprägniert oder bedruckt wird, die einen Farbstoff der Formel (I) oder Gemische solcher Farbstoffe enthalten.

BAD ORIGINAL

Die Erfindung betrifft außerdem die Verwendung der erfindungsgemäßen Träger zum Färben und Bedrucken von flächenförmigen Gebilden nach dem Thermotransferdruckverfahren. Bevorzugt bestehen diese flächenförmigen Gebilde aus synthetischen oder teilsynthetischen polymeren Materialien oder aus Materialien, die mit solchen synthetischen oder teilsynthetischen polymeren Materialien präpariert wurden. Die flächenförmigen Gebilde können auch aus natürlichen Fasermaterialien bestehen oder solche enthalten, sind dann aber mit Präparationen behandelt, die diesen natürlichen Materialien eine Affinität für die Farbstoffe der Formel (I) verleihen.

Die Farbstoffe der Formel (I) sind bekannt und werden durch Diazotierung und Kupplung der geeigneten Komponenten nach den üblichen Methoden zugänglich.

Überraschenderweise zeigen die erfindungsgemäß zu verwendenden Farbstoffe nicht nur ausgesprochen gute Transferiereigenschaften, sondern liefern auch farbtiefe Drucke mit punktscharfem Druckbild. Sie eignen sich deshalb auch gut in Kombination mit anderen Transferdruckfarbstoffen, wofür bekanntermaßen vorausgesetzt wird, daß alle Farbstoffe unter den angewandten Bedingungen eine weitgehend ähnliche Transfercharakteristik zeigen. Die Farbstoffe der Formel (I) weisen außerdem gute Lichtechtheiten auf.

Die Farbstoffe der Formel (I) zeigen weiterhin den Vorzug, daß mit ihnen leicht gießbare elektrolyt- und dispergiermittelarme Druckpasten mit hoher Farbstoffkonzentration hergestellt werden können, die wegen des geringen Druckpastenauftrags auf Papier sehr gesucht sind.

Als Trägermaterial für die erfindungsgemäßen Transferdruckträger eignen sich bekanntermaßen alle flächenförmigen Gebilde, die inert gegenüber den aufgebrachten Farbstoffen sind und die Sublimation nicht behindern. In Betracht kommen Flächengebilde aus Metall, wie Aluminiumfolie, oder aus natürlichen oder regenerierten Cellulosematerialien, wie Folien, Gewebe, Gewirke oder vorzugsweise Papierbahnen.

Die Zubereitungen, die die Farbstoffe der Formel (I) enthalten, und mit denen die Trägermaterialien imprägniert oder bedruckt werden, können wäßrige Druckpasten sein, wie sie im Textildruck üblich sind, oder organische Drucktinten, wie sie im graphischen Druck verwendet werden.

Wäßrige Druckfarben enthalten die üblichen natürlichen oder synthetischen Verdicker, beispielsweise Polyvinylalkohole, Methylcellulose oder Carboxygruppen enthaltende Polymerisationsprodukte, beispielsweise Polyacrylate.

Die Zusammensetzung der organischen Drucktinten richtet sich nach der Art des Substrats, des Trägermaterials, des Druckverfahrens und der zur Verfügung stehenden Anlagen. Im allgemeinen bestehen solche Drucktinten aus einem oder mehreren Farbstoffen der Formel (I), einem Bindemittel, einem Dispergiermittel und gegebenenfalls Lösemitteln, Füllstoffen und Konservierungsmitteln.

Als Bindemittel eignen sich natürliche, halbsynthetische und synthetische Harze, d.h. Polymerisations- und Polyadditionsprodukte. Als geeignete Harze seien beispielsweise genannt: Kolophonium und seine Derivate, Maleinatharze, ölfreie Alkydharze, Alkydharze aus synthetischen und

natürlichen Fettsäuren und arylierte Alkydharze. Geeignet sind auch Terpenharze, Polyvinylharze wie Polyvinylacetat und Polyvinylchlorid, Copolymere und Pfropfpolymere mit verschiedenen Vinylmonomeren, Acrylatharze, Naphthalin-Formaldehydharze, Ketonharze, Silikonharze und Cellulosederivate wie Celluloseester, beispielsweise Nitrocellulose oder Celluloseacetate, und Celluloseether, wie beispielsweise Methylcellulose, und andere Derivate dieser und anderer Polysaccharide.

Als Dispergiermittel kommen nichtionogene und anionogene Produkte zur Anwendung. Als nichtionogene Produkte seien beispielsweise genannt:
Anlagerungsprodukte von etwa 5 - 100 Mol Alkylenoxid an höhere Fettsäuren, Fettalkoholpolyglykolether, Phenol- und Alkylphenolether , aber auch Oxalkylate von mit mehrwertigen Alkoholen veresterten Fettsäuren oder von Harzderivaten wie Hydroabietylalkohol. Als anionische Dispergiermittel sind geeignet: Naphthalinsulfonsäure-Formaldehydkondensate, Ligninsulfonate und Sulfitablaugeprodukte.

Die Art der Lösemittel hängt von der Art des Druckverfahrens ab. Besonders bevorzugt sind Ester, Ketone oder Alkohole, beispielsweise Butylacetat, Aceton, Methylethylketon, Ethanol, Isopropanol oder Butanol.

Die Druckfarben können nach allen üblichen Druckverfahren, also Hoch-, Flach-, Tief- oder Siebdruck verdruckt werden. Besonders geeignete Druckverfahren zur Herstellung von bedruckten Papierhilfsträgern sind der Tiefdruck und der Rotationsfilmdruck.

Geeignete Substrate sind flächenförmige Gebilde wie Vliese, Filze, Pelze, Teppiche, Folien und vor allem Gewebe und Gewirke aus synthetischen oder teilsynthetischen Materialien, insbesondere aus aromatischen Polyestern wie Polyethylenglykolterephthalat oder Celluloseacetaten wie Cellulose-triacetat und Cellulose-2 1/2-acetat oder Polyamiden. Diese synthetischen oder teilsynthetischen Materialien zeigen eine Affinität für die Farbstoffe der Formel (I). Es ist jedoch möglich, andere Substrate nach dem Thermotransferdruck zu färben und zu bedrucken, die an sich keine Affinität zu diesen Farbstoffen besitzen, indem man nämlich solche Substrate mit den genannten synthetischen oder teilsynthetischen Materialien präpariert, also beispielsweise mit einem entsprechenden Überzug an solchen Kunststoffen umhüllt. Es ist auch möglich, natürliche Fasermaterialien, die keine Affinität für die Farbstoffe der Formel (I) aufweisen, mit geeigneten Präparationen zu behandeln und diese Stoffe so gegenüber diesen Farbstoffen affin zu machen. Entsprechende Verfahren sind beispielsweise aus der DE-PS 2 551 410, der DE-AS 2 436 783 oder der DE-OS 2 045 465 bekannt.

Der Thermotransferdruck ist allgemein bekannt und beispielsweise in der FR-PSS 1 223 330, 1 334 829 und 1 585 119 eingehend beschrieben. Hierbei werden die Hilfsträger, die mit den geeigneten Zubereitungen imprägniert oder bedruckt sind, in engen Kontakt mit dem zu färbenden oder bedruckenden Substrat gebracht, worauf unter Wärme- und gegebenenfalls Druck- oder Vakuumeinwirkung der Farbstoff von dem Träger auf das Substrat transferiert und dort fixiert wird.

Mit den Farbstoffen der Formel (I) erhält man bei deren erfindungsgemäßer Verwendung auf den Substraten gelbstichigrote bis violette, farbstarke Färbungen und Drucke mit guten Gebrauchsechtheiten.

In den folgenden Beispielen wird die Erfindung näher erläutert. Angaben über Teile und Prozente beziehen sich hierbei, sofern nichts anderes vermerkt ist, auf das Gewicht.

0072019

Beispiel 1

280 Teile des getrockneten Farbstoffes der folgenden Konstitution

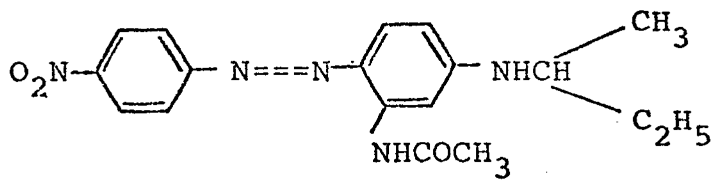

werden mit 84 Teilen eines nichtionogenen Dispergiermittels (Essigsäureester eines ethoxylierten Nonylphenols mit einem mittleren Molgewicht von 4700 und einem Ethylenoxidanteil von 94 %) und 180 Teilen Ethylenglykol, 300 Teilen Wasser und 5 Teilen Chloracetamid als Konservierungsmittel unter intensivem Rühren in einem Dissolver homogenisiert. Die ca. 33%ige Farbstoffmischung wird in eine Perlmühle überführt und mit Siliquarzitperlen unter Wasserkühlung gemahlen. Nach 4 Stunden erhält man eine Dispersion, deren Teilchen zu über 90 % kleiner als 3 µm sind. Die Dispersion wird mit Wasser auf 1000 Teile aufgefüllt und von den Perlen abgetrennt.

Die 30 % Farbstoff enthaltende Präparation ist sowohl bei 50°C als auch bei Raumtemperatur gut lagerstabil. Sie läßt sich in eine konventionelle Druckverdickung auf Alginat-Basis genau so gut einrühren und homogenisieren wie in eine synthetische auf Acrylat-Basis. Die Viskosität

der synthetischen Druckverdickung wird durch die Präparation nur unwesentlich beeinflußt, so daß nach den üblichen Druckverfahren mit "seichten" Gravuren gedruckt werden kann. Mit der Druckfarbe bedruckte Transferpapiere ergeben nach dem Transfer auf Polyester (ca. 25 Sekunden bei 200°C) einen kräftigen, roten Druck. Ähnliche gute Ergebnisse erhält man beim Transfer auf Polyester / Baumwolle (80 : 20).

Beispiel 2

300 Teile des getrockneten Farbstoffes der folgenden Konstitution

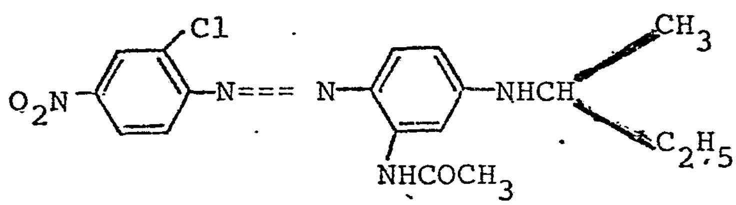

werden mit 100 Teilen des im Beispiel 1 genannten nichtionogenen Dispergiermittels und 30 Teilen Natriumligninsulfonat sowie
180 Teilen Ethylenglykol, 300 Teilen Wasser und 5 Teilen Chloracetamid als Konservierungsmittel unter intensivem Rühren in einem Dissolver homogenisiert.

Die ca. 36,4 %ige Farbstoffmischung wird in eine Perlmühle gegeben und mit Siliquarzitperlen unter Wasserkühlung gemahlen. Nach 5 Stunden erhält man eine Dispersion, deren Teilchen zu über 90 % kleiner als 3 µm sind. Die Dispersion wird mit Wasser auf 1000 Teile aufgefüllt und von den Perlen abgetrennt. Die 35 % Farbstoff enthaltende Präparation ist sowohl bei 50°C als auch bei Raumtemperatur gut lagerstabil. Sie läßt sich in eine konventionelle

Druckverdickung auf Alginat-Basis genauso gut einrühren und homogenisieren wie in eine synthetische auf Acrylat-Basis.

Mit der Druckfarbe bedruckte Transferpapiere ergeben nach dem Transfer auf Polyester (ca. 25 Sekunden bei 200°C) einen kräftigen, blaustichig-roten Druck. Ebenso gut kann man Polyester-Baumwoll-Materialien (80 : 20) bedrucken.

Beispiel 3

150 Teile des getrockneten Farbstoffes der folgenden Konstitution

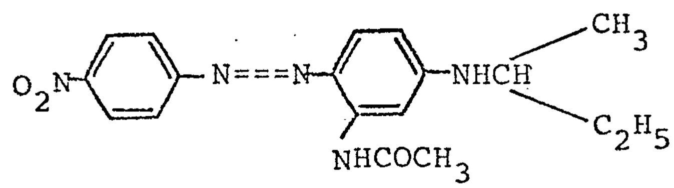

und 150 Teile des getrockneten Farbstoffes der folgenden Konstitution

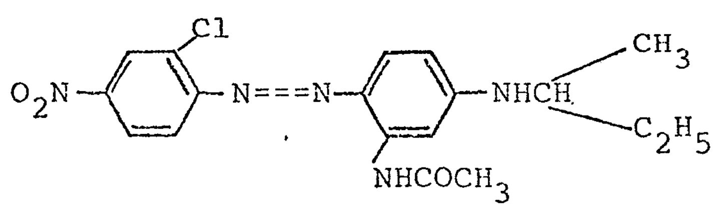

werden mit 80 Teilen eines nichtionogenen Dispergiermittels (Reaktionsprodukt von Glycerin mit Rizinusölfettsäure, umgesetzt mit 100 Mol Ethylenoxid) und 25 Teilen eines Ligninsulfonates sowie 150 Teilen Ethylenglykol, 200 Teilen Wasser und 5 Teilen Chloracetamid als Konservierungsmittel in einer Perlmühle mit Siliquarzitperlen gemahlen.

Nach sieben Stunden erhält man eine Dispersion, deren Teilchen zu über 90 % kleiner als 3 µm sind. Die Einstellung wird mit Wasser auf 1000 Teile aufgefüllt und von den Perlen abgetrennt.

Die 30 % Farbstoff enthaltende Präparation ist bei Raumtemperatur und auch bei 50°C gut lagerstabil. Die Präparation läßt sich gut sowohl in eine konventionelle Druckverdickung (Alginat-Basis) als auch in eine synthetische Druckverdickung (Acryl-Basis) einrühren und ist nach den üblichen Druckverfahren druckbar. Mit dieser Druckfarbe bedruckte Transferpapiere ergeben nach dem Transfer auf Polyester (ca. 25 Sekunden bei 200°C) einen roten kräftigen Druck. Auch auf PES/BW (80 : 20) erhält man einen starken roten Druck.

In der folgenden Tabelle sind weitere Farbstoffe angegeben sowie die damit erhältlichen Nuancen nach dem in Beispiel 1 angegebenen Verfahren. Statt einzelner reiner Farbstoffe können auch Mischungen derselben eingesetzt werden.

0072019

Beispiel

4) 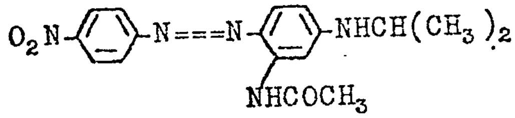 rot

5) 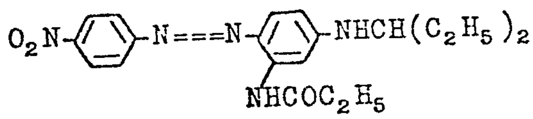 rot

6) 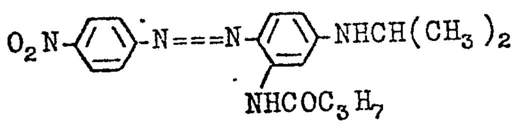 rot

7) 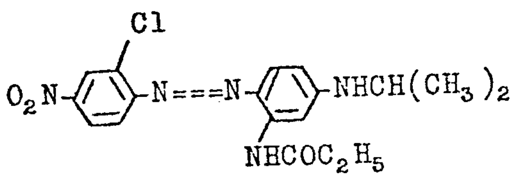 blaust. rot

8) 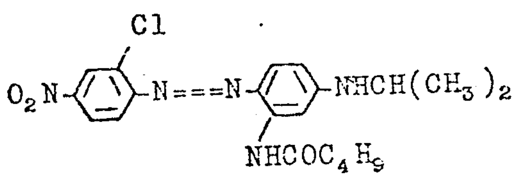 blaust. rot

9) 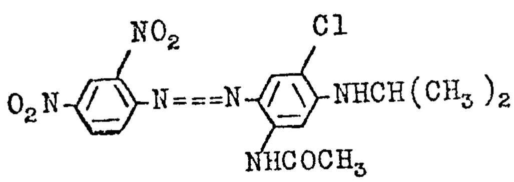 blaust. rot

10) 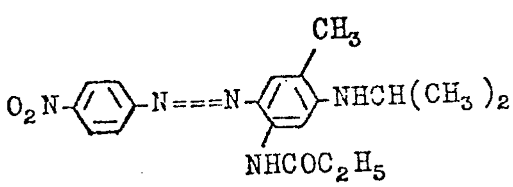 rot

11) 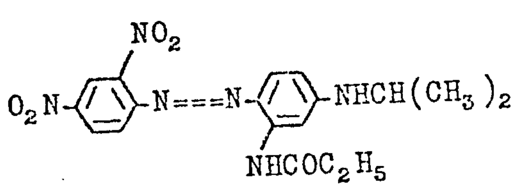 violett

0072019

12) 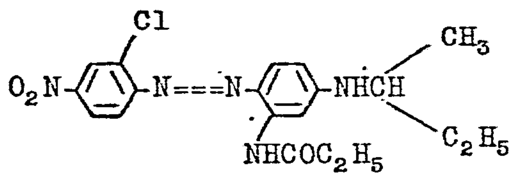 blaust. rot

13) 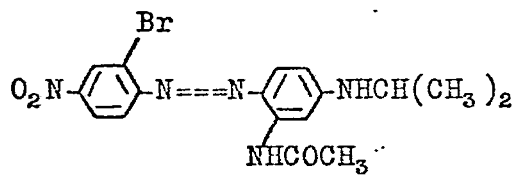 blaust. rot

14) 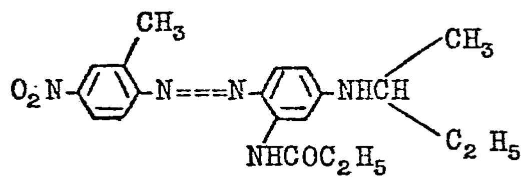 rot

15) 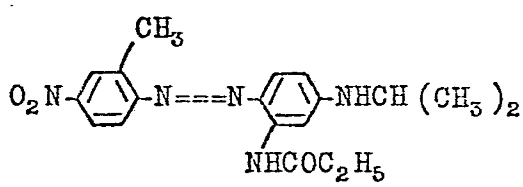 rot

16) 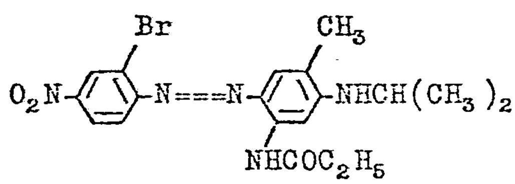 blaust. rot

17) 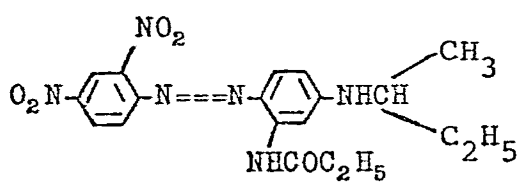 violett

18) 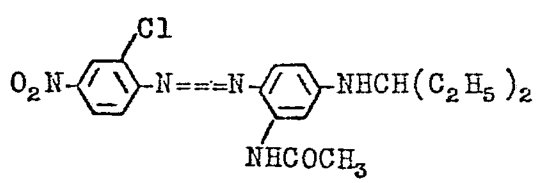 blaust. rot

0072019
HOE 81/F 200

PATENTANSPRÜCHE

1. Transferdruckträger, dadurch gekennzeichnet, daß sie mit Zubereitungen imprägniert oder bedruckt sind, die einen Farbstoff der allgemeinen Formel (I)

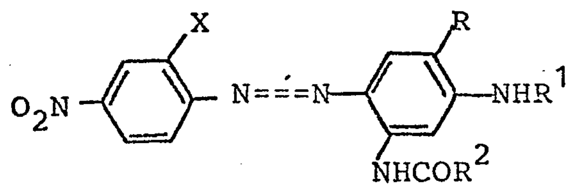

(I)

in der X Wasserstoff, Methyl, Chlor, Brom oder Nitro, R Wasserstoff, Methyl oder Chlor ist, $R^1$ Isopropyl, Isobutyl oder Pentyl-(3) und $R^2$ Methyl, Ethyl, n-Propyl oder n-Butyl bedeuten, oder Mischungen solcher Farbstoffe enthalten.

2. Träger nach Anspruch 1, dadurch gekennzeichnet, daß sie mit Zubereitungen imprägniert oder bedruckt sind, die Farbstoffe der allgemeinen Formel (I) enthalten, in der X Wasserstoff oder Chlor, R Wasserstoff, $R^1$ Isopropyl oder Isobutyl und $R^2$ Methyl oder Ethyl bedeuten, oder Mischungen solcher Farbstoffe enthalten.

3. Verfahren zur Herstellung der Träger nach Anspruch 1 und 2, dadurch gekennzeichnet, daß das Trägermaterial mit Zubereitungen imprägniert oder bedruckt wird, die einen Farbstoff der Formel (I) oder Gemische solcher Farbstoffe enthalten.

4. Verwendung der Träger nach Anspruch 1 und 2 zum Färben und Bedrucken von flächenförmigen Gebilden nach dem Thermotransferdruckverfahren.

5. Verwendung der Träger nach Anspruch 1 und 2 zum Färben und Bedrucken von flächenförmigen Gebilden, die aus synthetischen oder teilsynthetischen polymeren Materialien bestehen oder damit präpariert wurden, nach dem Thermotransferdruckverfahren.

6. Verwendung der Träger nach Anspruch 1 und 2 zum Färben und Bedrucken von flächenförmigen Gebilden, die aus natürlichen Fasermaterialien bestehen oder solche enthalten und die mit Präparationen behandelt wurden, die diesen Materialien eine Affinität für die Farbstoffe der Formel I verleihen, nach dem Thermotransferdruckverfahren.

Europäisches Patentamt

**EUROPÄISCHER RECHERCHENBERICHT**

0072019

Nummer der Anmeldung

EP 82 10 7204

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-2 935 068 (I.C.I.) * Ansprüche 1-3; Seite 6, die zwei letzten Absätze; Seite 7, Absatz 1; Seite 8, Absatz 3; Beispiele 1,3-8,12,13,18,44 * | 1-6 | D 06 P 5/00<br>B 41 M 5/02 //<br>D 06 P 1/18 |
| | --- | | |
| A | RESEARCH DISCLOSURE, Band 193, Mai 1980, Seite 189, Nr. 19338, Havant Hampshire, G.B. "Disperse dyes from substituted anilines and 2-(3-acylamidoanilino)-alkanes" * Insgesamt * | 1,2 | |
| | --- | | |
| A | DE-B-2 557 002 (HOECHST) * Spalten 3,4; Beispiel 3, Formel * | 1,3-6 | |
| | --- | | **RECHERCHIERTE SACHGEBIETE (Int. Cl. ³)** |
| A | GB-A-2 030 590 (I.C.I.) * Insgesamt * | 1 | |
| | --- | | |
| P,A | EP-A-0 038 527 (HOECHST) * Insgesamt und insbesondere Seite 12, Zeilen 15-20, Formel 13 * | 1,3-6 | D 06 P<br>B 41 M<br>C 09 B<br>C 09 D |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 29-09-1982 | DEKEIREL M.J. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82